# FASCICULE DE BREVET EUROPEEN

(11) **EP 2 227 043 B1**
(45) Date de publication et mention de la délivrance du brevet: **02.04.2014**
(21) Numéro de dépôt: 10001304.4
(22) Date de dépôt: 09.02.2010
(51) Int. Cl.: H04L 12/58, H04L 29/08, H04W 8/20

(54) **Service de messagerie instantanée dans un terminal mobile**
Instant-messaging-Dienst in einem mobilen Endgerät
Instant messaging service in a mobile terminal

(30) Priorité: 03.03.2009 FR 0900960; 03.03.2009 US 396717
(43) Date de publication de la demande: 08.09.2010
(73) Titulaire: Synchronoss Technologies France, 13002 Marseille (FR)
(72) Inventeur: Colon, François, 13013 Marseille (FR)
(74) Mandataire: Novagraaf Technologies

(56) Documents cités:
- WO-A-03/098425
- WO-A-2008/002105
- US-A1- 2004 122 901
- US-A1- 2007 165 653

## Description

### DOMAINE TECHNIQUE DE L'INVENTION

La présente invention a pour objet un procédé pour activer des fonctionnalités proposées dans un terminal informatique. Elle a également pour objet un dispositif et un terminal informatique permettant la mise en oeuvre de ce procédé.

L'invention concerne le domaine technique général des moyens d'aide à l'utilisateur ou des moyens de sélection de fonctionnalités facilitant l'emploi des terminaux informatiques.

### ETAT DE LA TECHNIQUE

Les terminaux informatiques (tels que téléphones mobiles, ordinateurs PC portables ou fixes, PDA, BlackBerry®, ...) sont généralement équipés d'un certain nombre de fonctionnalités permettant, par exemple, de consulter des mails (MAIL), d'ouvrir une session de messagerie instantanée (IM), de communiquer sur un Blog (BLOG). Chacune de ces fonctionnalités est mise en oeuvre par une application informatique spécifique (ou logiciel) intégrée dans le terminal informatique.

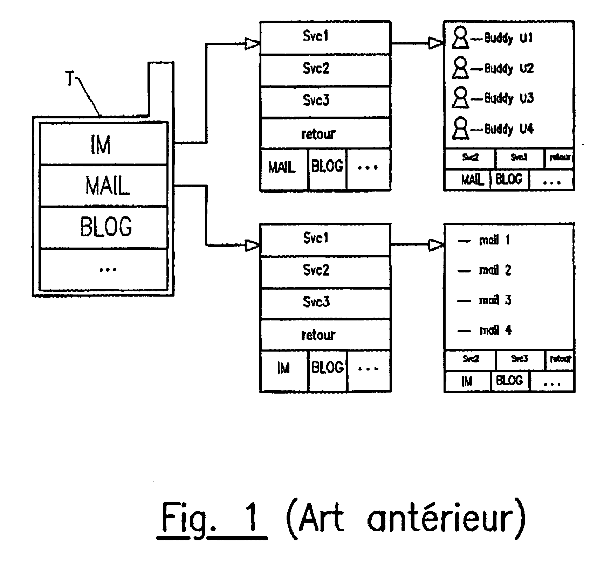

La figure 1 schématise différents types de représentation d'écran d'un terminal informatique T lors de l'activation de ces fonctionnalités. Initialement, l'écran du terminal T affiche les différentes fonctionnalités (IM, MAIL, BLOG ou autre) sous forme de bandes, d'icônes, de menus déroulants, etc. L'utilisateur peut, au moyen des touches de navigation de son clavier, sélectionner la fonctionnalité souhaitée.

Par exemple, dans le cas où l'utilisateur sélectionne la fonction messagerie instantanée (IM), une application informatique spécifique (AIM®, ICQ®, Windows Live Messenger®, Yahoo ! Messenger®, ...) est lancée de manière à ce que le terminal T puisse se connecter à un serveur source de messagerie instantanée S_{IM} (Microsoft Live Communication Server®, Sun Java System Instant Messaging®, Jabberd®, Groupwise Messenger®, ...) et utiliser les services de messagerie instantanée traditionnellement proposés : conversation Svc1, gestion des listes des contacts Svc2, gestion des statuts Svc3, etc. Ces services Svc1, Svc2, Svc3, se présentent sur l'écran du terminal T sous forme de bandes, d'icônes, de menus déroulants, etc. L'utilisateur peut alors sélectionner le service souhaité au moyen des touches de navigation de son clavier. À titre d'exemple, lorsque l'utilisateur actionne le service de conversation Svc1, le serveur IM renvoie vers le terminal T, la liste de contacts « usager » U1, U2, U3, U4 (ou « Buddy list » en anglais), ladite liste s'affichant sur l'écran dudit terminal.

Dans le cas où l'utilisateur sélectionne la fonction mail (MAIL), une nouvelle application informatique spécifique (Google Mail®, SFR Mail®, Orange Mail®, Outlook®, ...) est lancée de manière à ce que le terminal T puisse se connecter à un serveur source MAIL Sₘₐᵢₗ (SendMail®, Zimbra®, Lotus®, Microsoft Exchange Server®, ...) et utiliser les services mail traditionnellement proposés : réception/envoi e-mail Svc1, gestion du carnet d'adresse Svc2, règles de messages Svc3, etc. Ces services se présentent sur l'écran du terminal T de la même façon que pour la fonction IM décrite précédemment. A titre d'exemple, lorsque l'utilisateur actionne le service de réception/envoi e-mail Svc1, le serveur MAIL renvoie vers le terminal T la boîte aux lettres mails de l'utilisateur, la liste des mails s'affichant sur l'écran dudit terminal.

On comprend qu'un fonctionnement similaire est mis en oeuvre lorsque l'utilisateur sélectionne la fonction BLOG ou une autre fonction.

On connaît par ailleurs dans l'art antérieur, les documents WO 2008/002105 et WO 03/098425 qui se rapportent au domaine des messageries électronique.

L'objectif de l'invention est de proposer une nouvelle interface, plus simple à manipuler, et permettant à un utilisateur d'activer des fonctionnalités sur un terminal informatique.

Plus particulièrement, l'invention vise à intégrer sur un terminal informatique des fonctionnalités permettant d'accéder rapidement à certains services, lorsque l'utilisateur a préalablement souscrit à ces services.

### DIVULGATION DE L'INVENTION

Pour ce faire, l'invention a pour objet un procédé pour activer des fonctionnalités proposées dans un terminal informatique et délivrées par des serveurs sources, une de ces fonctionnalités étant un service de messagerie instantanée où une liste, comportant des contacts « usager », s'affiche sur l'écran dudit terminal, ce procédé étant remarquable en ce que :
- un serveur de messagerie instantanée, délivrant le service de messagerie instantanée, émet la liste des contacts « usager »,
- la liste des contacts « usager » transite par un serveur passerelle distant du terminal informatique,
- le serveur passerelle rajoute, à la volée, des contacts « fonctionnalité » dans la liste des contacts « usager »,
- le serveur passerelle transmet au terminal informatique une liste agrégée formant interface unique et comprenant les contacts « usager » ainsi que les contacts « fonctionnalité »,
- le terminal informatique affiche sur son écran la liste agrégée dans laquelle sont inscrits les contacts « usager » et les contacts « fonctionnalité »,
- une fonctionnalité étant activée par la sélection, dans la liste agrégée affichée sur l'écran du terminal informatique, du contact « fonctionnalité » correspondant.

L'utilisateur du terminal informatique dispose maintenant d'une unique interface, similaire à celle utilisée lors de la mise en oeuvre d'une session de messagerie instantanée, et permettant d'activer très simplement les différentes fonctionnalités proposées par ledit terminal. Cette nouvelle interface ainsi créée demande moins de ressources que les interfaces connues de l'homme du métier et habituellement proposée aux utilisateurs de terminaux informatiques. Pour cette raison, il est particulièrement avantageux de proposer cette nouvelle interface sur un terminal mobile où les ressources doivent être optimisées.

Pour la génération des contacts « fonctionnalité », le serveur passerelle peut générer directement lesdits contacts. Dans ce cas, le serveur passerelle comporte une base de données dans laquelle sont mis en correspondance chaque utilisateur d'un terminal informatique et les fonctionnalités associées aux services auxquels lesdits utilisateurs ont souscrit, ledit serveur passerelle générant, pour chaque utilisateur, les contacts « fonctionnalité » associés aux dits services souscrits.

Dans une variante de réalisation, ce sont les serveurs sources qui génèrent directement les contacts « fonctionnalité ». Dans ce cas, les serveurs sources transmettent au serveur passerelle les contacts « fonctionnalité » associés aux services auxquels l'utilisateur du terminal informatique a souscrit.

Dans une autre variante de réalisation, les serveurs sources transmettent au serveur passerelle des informations indiquant les services auxquels l'utilisateur du terminal informatique a souscrit, ledit serveur passerelle générant les contacts « fonctionnalité » associés auxdites informations reçues.

Selon des caractéristiques préférées de l'invention :
- lors de leur affichage sur l'écran du terminal informatique, les contacts « usager » sont associés à des statuts de présence,
- lors de leur affichage sur l'écran du terminal informatique, tout ou partie des contacts « fonctionnalité » sont associés à des statuts contenant des informations sur l'état des fonctionnalités correspondantes,
- les différents statuts sont régulièrement mis à jour.

Avantageusement :
- le terminal informatique transmet des requêtes de mise à jour à destination des serveurs sources,
- en réponse à ces requêtes, les serveurs sources transmettent au terminal informatique des informations de mise à jour des statuts associés aux contacts « usager » et aux contacts « fonctionnalité ».

L'invention concerne également un dispositif pour activer des fonctionnalités proposées dans un terminal informatique et délivrées par des serveurs sources, une de ces fonctionnalités étant un service de messagerie instantanée où une liste, comportant des contacts « usager », s'affiche sur l'écran dudit terminal, ce dispositif étant remarquable en ce qu'il comporte :
- un serveur de messagerie instantanée auquel se connecte le terminal informatique, ledit serveur comportant un moyen pour émettre la liste de contacts « usager »,
- un serveur passerelle distant du terminal informatique et par lequel transite la liste des contacts « usager », ledit serveur comportant :

- un moyen pour rajouter à la volée les contacts « fonctionnalité » dans la liste des contacts « usager »,
- un moyen pour transmettre au terminal informatique une liste agrégée formant interface unique et comprenant les contacts « usager » ainsi que les contacts « fonctionnalité », de sorte que ladite liste s'affiche sur l'écran dudit terminal,
- et remarquable en ce qu'une fonctionnalité est activée par la sélection, dans la liste agrégée affichée sur l'écran du terminal informatique, du contact « fonctionnalité » correspondant.

Encore un autre aspect de l'invention concerne un terminal informatique, particulièrement un téléphone mobile, équipé d'un écran et dans lequel sont proposées plusieurs fonctionnalités, une de ces fonctionnalités étant un service de messagerie instantanée où une liste, comportant des contacts « usager », s'affiche sur ledit écran, ledit terminal étant remarquable en ce que des contacts « fonctionnalité » sont rajoutés dans la liste des contacts « usager » de sorte qu'une liste agrégée dans laquelle, sont inscrits lesdits contacts « usager » et lesdits contacts « fonctionnalité » s'affiche sur l'écran, et en ce qu'une fonctionnalité est activée par la sélection, dans la liste agrégée, du contact « fonctionnalité » correspondant.

### DESCRIPTION DES FIGURES

D'autres avantages et caractéristiques de l'invention apparaîtront mieux à la lecture de la description d'un mode de réalisation préféré qui va suivre, en référence aux dessins annexés, réalisés à titre d'exemples indicatifs et non limitatifs et sur lesquels :
- la figure 1 illustre différents types de représentations d'écran d'un terminal mobile de l'art antérieur lors de l'activation des fonctionnalités,
- la figure 2 schématise les différentes étapes du procédé objet de l'invention,
- la figure 3 illustre chronologiquement les différentes étapes du procédé objet de l'invention,
- la figure 4 représente schématiquement un réseau de communication dans lequel le terminal informatique met en oeuvre une session mail MAIL, et
- la figure 5 représente schématiquement un réseau de communication dans lequel le terminal informatique met en oeuvre une session de Messagerie Instantanée IM.

### MODES DE REALISATION DE L'INVENTION.

Le procédé objet de l'invention permet d'activer des fonctionnalités proposées dans un terminal informatique T et délivrées par des serveurs sources S_{IM}, Sₘₐᵢₗ, S_{Blog}, S_{...}. Il s'applique particulièrement bien à la génération d'une interface nécessitant peu de ressources et permettant l'activation de fonctionnalités proposées dans un téléphone mobile.

Le terminal informatique T utilisé pour la mise en oeuvre de l'invention peut être un terminal mobile tel qu'un téléphone mobile, un appareil du type assistant digital personnel (PDA), un appareil du type BlackBerry®, ou un terminal fixe tel qu'un ordinateur PC. Le terminal T est équipé d'un écran. D'une manière bien connue de l'homme du métier, le terminal T est équipé d'un processeur configuré pour exécuter un ou plusieurs programmes, sous-programmes, microprogrammes ou tous autres types de software équivalents, afin de gérer les étapes du procédé qui vont être décrites en détail dans la suite de la description. Le terminal T intègre également un certain nombre d'applications informatiques (programmes, sous-programmes, microprogrammes, ...) lui permettant de mettre en oeuvre les différentes fonctionnalités qu'il intègre : messagerie instantanée, mails, blog, etc.

Les serveurs sources S_{IM}, Sₘₐᵢₗ, S_{Blog}, S_{...} sont bien connus de l'homme du métier. Ils permettent de délivrer les fonctionnalités proposées dans le terminal informatique T. Ils consistent généralement en un ordinateur ou un programme informatique configuré pour proposer certaines fonctionnalités (mails, blog, ...) et en particulier des services de messagerie instantanée, à un terminal T qui s'y connecte. En pratique, il s'agit d'un serveur de messagerie instantanée S_{IM} : Microsoft Live Communication Server®, Sun Java System Instant Messaging®, Jabber®, Groupwise Messenger®, ou autres ; d'un serveur mail Sₘₐᵢ : SendMail®, Zimbra®, Lotus®, Microsoft Exchange Server®, ou autres ; d'un serveur blog S_{Blog} ou de tous autres serveurs similaires aptes à délivrer des services. D'une manière bien connue, les serveurs sources S_{IM}, Sₘₐᵢₗ, S_{Blog}, S_{...} intègrent des applications informatiques et sont équipés d'un processeur configuré pour exécuter un ou plusieurs programmes, sous-programmes, microprogrammes ou tous autres types de software équivalents, leur permettant de gérer les différentes fonctionnalités F1, F2, F3 qui sont proposées dans le terminal T ainsi que les étapes du procédé qui vont être décrites en détail dans la suite de la description.

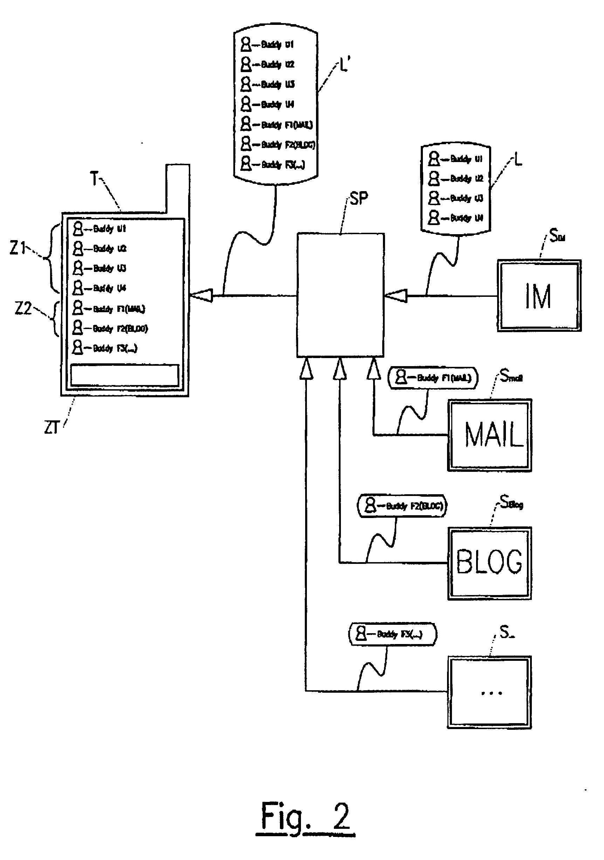

En se rapportant aux figures 2 à 5, le terminal T est configuré pour afficher sur son écran les différentes fonctionnalités proposées (MAIL, IM, BLOG ou autre) en tant que contacts (ou « Buddy ») dans sa liste de contacts « usager » de messagerie instantanée (ou « Buddy list »). En pratique, dès que l'utilisateur décide d'accéder aux différentes fonctionnalités proposées (via le menu de son terminal T), l'écran du terminal T affiche une liste de contacts dans laquelle sont présents simultanément: les contacts « usager » U1, U2, U3, U4 à proprement parler (zone écran Z1) et des contacts « fonctionnalités » F1 (par exemple une fonction MAIL), F2 (par exemple une fonction BLOG), F3 (une autre fonction) (zone écran Z2). Cette liste de contacts enrichie est au format HTML, ou dans un autre format classiquement utilisé en messagerie instantanée. L'utilisateur peut activer une des fonctionnalités en sélectionnant, dans la liste agrégée affichée sur l'écran du terminal T, le contact « fonctionnalité » correspondant.

Conformément à l'invention, et en se rapportant à la figure 2, on rajoute à la volée, dans un serveur SP qui est distant du terminal T, des contacts « fonctionnalité » F1(MAIL), F2(BLOG), F3(...) dans la liste L des contacts « usager » U1, U2, U3, U4. On transmet ensuite au terminal T une liste agrégée L' comprenant les contacts « usager » U1, U2, U3, U4 et les contacts « fonctionnalité » F1, F2, F3 de sorte que ladite liste agrégée s'inscrive sur l'écran dudit terminal. L'utilisateur du terminal T dispose ainsi d'une unique interface, similaire à celle utilisée lors de la mise en oeuvre d'une session de messagerie instantanée mais nécessitant moins de ressources, et permettant d'activer très simplement les différentes fonctionnalités proposées par ledit terminal.

En pratique, lorsque le terminal T se connecte à un serveur de messagerie instantanée S_{IM}, ce dernier émet une liste L de contacts « usager ». Cette liste initiale L regroupe les différentes personnes U1, U2, U3, U4 (« Buddy ») avec qui l'utilisateur du terminal T a la possibilité de communiquer par messagerie instantanée. Cette liste L de contacts « usager » transite par un serveur passerelle SP distant du terminal T. Ce serveur passerelle SP rajoute, à la volée, les contacts « fonctionnalité » F1, F2, F3 dans la liste L des contacts « usager ».

Le serveur passerelle SP est indépendant ou non des serveurs sources S_{IM}, Sₘₐᵢₗ, S_{Blog}, S_{...}. Le serveur passerelle SP est agencé de manière à ce que tout ou partie des informations à destination ou émises par le terminal T transitent par ledit serveur passerelle. En pratique, ce serveur passerelle SP, plus connu par l'homme du métier par le terme anglais « gateway », est un ordinateur ou un programme informatique configuré pour proposer certains services aux terminaux informatiques des clients qui s'y connectent. Le serveur passerelle SP peut notamment être équipé de moyens permettant de gérer une session de messagerie instantanée, de filtrer des messages, de gérer les listes de contacts d'un utilisateur, etc. D'autres services tels que : prévision météo, publicités, jeux, messagerie audio, ou autres peuvent également être mis en oeuvre par le serveur passerelle SP. Ce dernier permet de déporter et/ou d'ajouter certaines fonctionnalités sans avoir à modifier le serveur source SS. D'une manière bien connue, le serveur passerelle SP intègre des applications informatiques et est équipé d'un processeur configuré pour exécuter un ou plusieurs programmes, sous-programmes, microprogrammes ou tous autres types de software équivalents, lui permettant de gérer les étapes du procédé qui vont être décrites en détail dans la suite de la description.

### 1^{er} cas : les contacts « fonctionnalité » F1, F2, F3 sont générés directement par le serveur passerelle SP.

Dans ce cas, le serveur passerelle SP connaît les fonctionnalités susceptibles d'être proposées dans le terminal T et génère en conséquent des contacts « fonctionnalité » propres à chaque utilisateur. En effet, le serveur passerelle SP générera les contacts « fonctionnalité » selon l'utilisateur et les services auxquels ce dernier aura souscrit. Le serveur passerelle SP comporte à cet effet une base de données dans laquelle sont mis en correspondance les utilisateurs et les fonctionnalités susceptibles d'être proposées sur leur terminal informatique. En pratique, lorsqu'un utilisateur active son terminal T, ce dernier émet une requête d'authentification à destination du serveur passerelle SP. Une fois authentifié, le serveur passerelle SP analyse les services souscrits par cet utilisateur et génère les contacts « fonctionnalité » correspondants.

### 2^{nd} cas : les contacts « fonctionnalité » F1, F2, F3 sont générés directement par les serveurs sources Sₘₐᵢₗ, S_{Blog}, S_{...}.

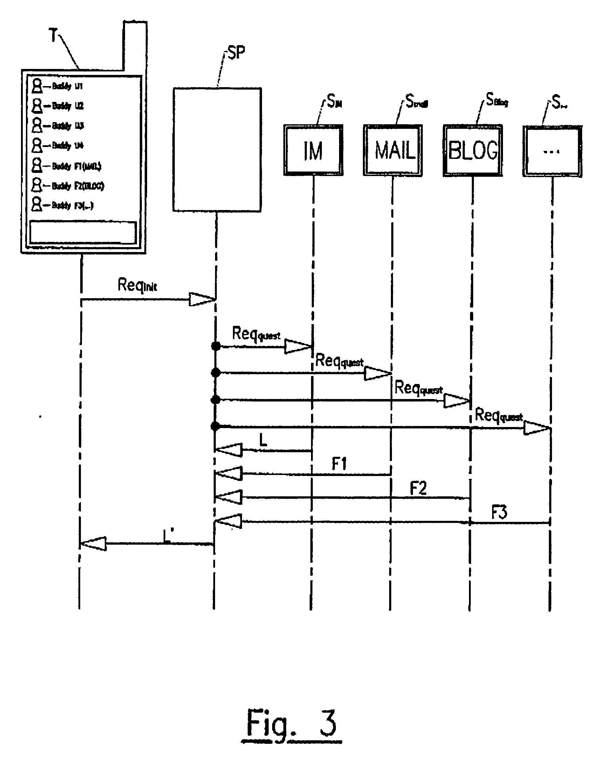

Ce cas est illustré par les figures 2 et 3. Lorsque l'utilisateur active son terminal T, ce dernier émet une requête d'authentification Reqₐᵤₜₕ à destination du serveur passerelle SP. Une fois que l'utilisateur est authentifié, le serveur passerelle SP va questionner les différents serveurs sources Sₘₐᵢₗ, S_{Blog}, S_{...} de manière à savoir si l'utilisateur à souscrit aux différents services qu'ils proposent. En pratique, le serveur passerelle SP émet, à destination des différents serveurs sources, des requêtes Req_{quest} en ce sens, lesdites requêtes contenant l'identification de l'utilisateur. A la réception de ces requêtes Req_{quest}, les différents serveurs sources S_{IM}, Sₘₐᵢₗ, S_{Blog}, S_{...} contrôlent d'identification de l'utilisateur. Si l'identification de l'utilisateur est reconnue par les serveurs sources S_{IM}, Sₘₐᵢₗ, S_{Blog}, S_{...}, alors ces derniers transmettent les contacts correspondants : le serveur IM S_{IM} transmettra la liste L des contacts « usager » U1, U2, U3, U4 et les autres serveurs Sₘₐᵢₗ, S_{Blog}, S_{...}transmettrons les contacts « fonctionnalité » F1, F2, F3 associés aux services qu'ils proposent et auquel l'utilisateur a souscrit. Dès lors, le serveur passerelle SP rajoute les contacts « fonctionnalité » F1, F2, F3 dans la liste L des contacts « usager » et transmet au terminal T la liste L' agrégée.

### 3^{e} cas : les contacts « fonctionnalité » F1, F2, F3 sont générés par le serveur passerelle SP et par les serveurs sources Sₘₐᵢₗ, S_{Blog}, S_{...}.

On peut prévoir qu'après avoir reçu les requêtes Req_{quest} et reconnu l'identification de l'utilisateur, les différents serveurs sources Sₘₐᵢₗ, S_{Blog}, S_{...} transmettent au serveur passerelle SP, non pas directement les contacts « fonctionnalité » F1, F2, F3 mais plutôt des informations indiquant audit serveur passerelle les services auquel l'utilisateur a souscrit. Dès lors, le serveur passerelle SP génère les contacts « fonctionnalité » F1, F2, F3 associés aux informations reçues.

Pour activer une fonctionnalité, l'utilisateur peut directement sélectionner, dans la liste agrégée L' affichée sur l'écran du terminal T, le contact « fonctionnalité » correspondant. L'utilisateur peut par exemple, au moyen des touches de navigation de son clavier, sélectionner la fonctionnalité souhaitée et l'activer par un simple clic. Dans ce cas, l'application informatique associée à la fonctionnalité activée est lancée de manière classique, l'interface habituellement associée à ladite fonctionnalité apparaissant directement sur l'écran du terminal T.

Dans une variante de réalisation, l'utilisateur inscrit dans la zone d'écriture texte ZT du terminal T, le nom du contact « fonctionnalité » associé à la fonctionnalité qu'il souhaite activer. Par exemple, il tapera le mot « F1 » ou « MAIL » s'il souhaite utiliser la fonctionnalité MAIL, ou le mot « F2 » ou « BLOG » s'il souhaite utiliser la fonctionnalité BLOG, etc. Les fonctionnalités MAIL, BLOG, ..., peuvent être associées à des numéros, des symboles ou de manière plus générale à des messages texte prédéfinis. Dans ce cas, l'utilisateur inscrira dans la zone texte ZT, le message texte associé à la fonctionnalité qu'il souhaite utiliser. Le message texte inscrit dans la zone texte ZT est ensuite envoyé vers le serveur passerelle SP, par exemple au format HTML. Pour utiliser la messagerie instantanée IM, il suffit que l'utilisateur inscrive dans la zone texte ZT, le nom du ou des contacts « usager » U1, U2, U3, U4 avec lequel il souhaite converser.

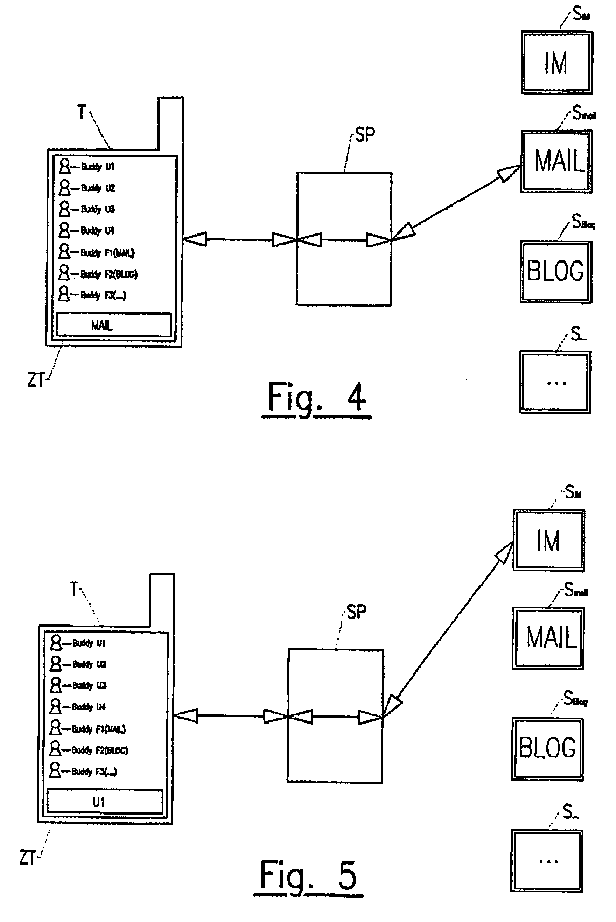

En se rapportant à la figure 4, dans le cas où le message texte envoyé est « MAIL » (ou un message texte associé à la fonction MAIL par exemple « F1 »), le serveur passerelle SP est capable de « comprendre » ce message pour établir une connexion avec le serveur source MAIL Sₘₐᵢₗ correspondant. Un fonctionnement similaire se produit lorsque le message texte envoyé correspond à la fonction BLOG ou une autre fonction. Pour comprendre les messages textes qu'il reçoit, le serveur passerelle SP comporte avantageusement une zone-mémoire dans lequel ces messages textes sont associés aux requêtes destinées à être émises vers les serveurs sources S_{IM}, Sₘₐᵢₗ, S_{Blog}, S_{...}. Par exemple, lorsqu'il reçoit le message texte (au format cible) associé à la fonction MAIL, le serveur passerelle SP comporte un logiciel capable d'analyser ce message texte et de l'associer à la requête destinée au serveur source MAIL Sₘₐᵢₗ. En se rapportant à la figure 5, dans le cas où le message texte envoyé correspond au nom du contact « usager » U1, le serveur passerelle SP comprend ce message pour établir une connexion avec le serveur source S_{IM} correspondant : le serveur passerelle SP analyse le message texte « U1 » et l'associe à la requête destinée au serveur source S_{IM}. Les requêtes émises par le serveur passerelle SP à destination des serveurs sources Sₘₐᵢₗ, S_{Blog}, S_{...} est en pratique une requête classique d'autorisation de connexion permettant de mettre en oeuvre le service associé à la fonctionnalité choisie par l'utilisateur.

Lors de leur affichage sur l'écran du terminal T, les contacts « usager » U1, U2, U3, U4 sont préférentiellement associés à des statuts de présence régulièrement mis à jour. Ces statuts de présence peuvent par exemple indiquer qu'un utilisateur est disponible, indisponible, indisponible temporairement, etc. La mise à jour plus ou moins complexe des statuts de présence des contacts « usager » est par exemple décrit dans les documents brevets US2003/073440 (VERSADA NETWORKS), US2004/056901 (MARCH), US2006/009243 (AT & T WIRELESS SERVICES), US2006/129643 (NIELSON), US2006/194596 (DENG), US2008/299953 (RAO) ou encore US2008/267091 (NOKIA). En pratique, le terminal T transmet régulièrement des requêtes de mise à jour à destination du serveur de messagerie instantanée S_{IM} (via ou non le serveur passerelle SP). En réponse à ces requêtes, le serveur de messagerie instantanée S_{IM} transmet au terminal T (via ou non le serveur passerelle SP) des informations de mise à jour des statuts de présence associés aux contacts « usager ».

Conformément à une caractéristique avantageuse de l'invention, lors de leur affichage sur l'écran du terminal T, tout ou partie des contacts « fonctionnalité » F1, F2, F3 sont également associés à des statuts contenant des informations sur l'état des fonctionnalités correspondantes. Par exemple, en vis-à-vis du contact « fonctionnalité » F1 (MAIL), on peut lire le nombre de messages non lus, en vis-à-vis du contact « fonctionnalité » F2(BLOG), le nombre de commentaires sur le blog, etc. Comme pour les statuts de présences, ces différents statuts sont régulièrement mis à jour. En pratique, le terminal T transmet régulièrement des requêtes de mise à jour à destination des serveurs sources SIM, Smail, SBlog, S... (via ou non le serveur passerelle SP). En réponse à ces requêtes, les serveurs sources transmettent au terminal T (via ou non le serveur passerelle SP) des informations de mise à jour des statuts associés aux contacts « fonctionnalité » correspondants.

## Revendications

1. Procédé pour activer des fonctionnalités proposées dans un terminal informatique (T) et délivrées par des serveurs sources (S_{IM}, Sₘₐᵢₗ, S_{Blog}, S...), une de ces fonctionnalités étant un service de messagerie instantanée où une liste (L), comportant des contacts usager (U1, U2, U3, U4), s'affiche sur l'écran dudit terminal, **caractérisé en ce que** :
- un serveur de messagerie instantanée (S_{IM}), délivrant le service de messagerie instantanée, émet la liste (L) des contacts usager (U1, U2, U3, U4),
- la liste (L) des contacts usager (U1, U2, U3, U4) transite par un serveur passerelle (SP) distant du terminal informatique (T),
- le serveur passerelle (SP) rajoute, à la volée, des contacts fonctionnalité (F1, F2, F3) dans la liste (L) des contacts usager (U1, U2, U3, U4),
- le serveur passerelle (SP) transmet au terminal informatique (T) une liste agrégée (L') formant interface unique et comprenant les contacts usager (U1, U2, U3, U4) ainsi que les contacts fonctionnalité (F1, F2, F3),
- le terminal informatique (T) affiche sur son écran la liste agrégée (L') dans laquelle sont inscrits les contacts usager (U1, U2, U3, U4) et les contacts fonctionnalité (F1, F2, F3),
- une fonctionnalité étant activée par la sélection, dans la liste agrégée (L') affichée sur l'écran du terminal informatique (T), du contact fonctionnalité (F1, F2, F3) correspondant.

2. Procédé selon la revendication 1, dans lequel le serveur passerelle (SP) comporte une base de données dans laquelle sont mis en correspondance chaque utilisateur d'un terminal informatique (T) et les fonctionnalités associées aux services auxquels lesdits utilisateurs ont souscrit, ledit serveur passerelle générant, pour chaque utilisateur, les contacts fonctionnalité (F1, F2, F3) associés aux dits services souscrits.

3. Procédé selon la revendication 1, dans lequel les serveurs sources (S_{IM}, Sₘₐᵢₗ, S_{Slog}, S...) transmettent au serveur passerelle (SP) les contacts fonctionnalité (F1, F2, F3) associés aux services auxquels l'utilisateur du terminal informatique (T) a souscrit.

4. Procédé selon la revendication 1, dans lequel les serveurs sources (Sₘₐᵢₗ, S_{Blog}, S...) transmettent au serveur passerelle (SP) des informations indiquant les services auxquels l'utilisateur du terminal informatique (T) a souscrit, ledit serveur passerelle générant les contacts fonctionnalité (F1, F2, F3) associés aux dites informations reçues.

5. Procédé selon l'une des revendications précédentes, dans lequel :
- lors de leur affichage sur l'écran du terminal informatique (T), les contacts usager (U1, U2, U3, U4) sont associés à des statuts de présence,
- lors de leur affichage sur l'écran du terminal informatique (T), tout ou partie des contacts fonctionnalité (F1, F2, F3) sont associés à des statuts contenant des informations sur l'état des fonctionnalités correspondantes,
- les différents statuts sont régulièrement mis à jour.

6. Procédé selon la revendication 5, dans lequel le terminal informatique (T) transmet des requêtes de mise à jour à destination des serveurs sources (S_{IM}, Sₘₐᵢₗ, S_{Blog}, S...), en réponse à ces requêtes, les serveurs sources (S_{IM}, Sₘₐᵢₗ, S_{Blog}, S...) transmettent au terminal informatique (T) des informations de mise à jour des statuts associés aux contacts usager (U1, U2, U3, U4) et aux contacts fonctionnalité (F1, F2, F3).

7. Dispositif pour activer des fonctionnalités proposées dans un terminal informatique (T) et délivrées par des serveurs sources (S_{IM}, Sₘₐᵢₗ, S_{Blog}, S...), une de ces fonctionnalités étant un service de messagerie instantanée où une liste (L), comportant des contacts usager (U1, U2, U3, U4), s'affiche sur l'écran dudit terminal, ce dispositif **se caractérisant par le fait qu'**il comporte :
- un serveur de messagerie instantanée (S_{IM}) auquel se connecte le terminal informatique (T), ledit serveur comportant un moyen pour émettre la liste (L) des contacts usager (U1, U2, U3, U4),
- un serveur passerelle (SP) distant du terminal informatique (T) et par lequel transite la liste (L) des contacts usager (U1, U2, U3, U4), ledit serveur comportant :
- un moyen pour rajouter à la volée les contacts fonctionnalité (F1, F2, F3) dans la liste (L) des contacts usager (U1, U2, U3, U4),
- un moyen pour transmettre au terminal informatique (T) une liste agrégée (L') formant interface unique et comprenant les contacts usager (U1, U2, U3, U4) ainsi que les contacts fonctionnalité (F1, F2, F3), de sorte que ladite liste s'affiche sur l'écran dudit terminal,
- et **par le fait qu'**une fonctionnalité est activée par la sélection, dans la liste (L') agrégée affichée sur l'écran du terminal informatique (T), du contact fonctionnalité correspondant.

8. Terminal informatique équipé d'un écran et dans lequel sont proposées plusieurs fonctionnalités, une de ces fonctionnalités étant un service de messagerie instantanée où une liste (L), émise par un serveur de messagerie instantanée (S_{IM}) comportant des contacts usager (U1, U2, U3, U4), s'affiche sur ledit écran **caractérisé en ce que** ledit terminal reçoit d'un serveur passerelle (SP) distant dudit terminal informatique une liste agrégée (L') formant une interface unique sur ledit écran et comprenant les contacts usager (U1, U2, U3, U4) ainsi que les contacts fonctionnalité (F1, F2, F3), et **en ce qu'**une fonctionnalité est activée par la sélection, dans la liste agrégée (L'), du contact fonctionnalité (F1, F2, F3) correspondant.

9. Terminal informatique selon la revendication 8, ledit terminal étant un téléphone mobile.

## Patentansprüche

1. Verfahren zur Aktivierung der Funktionen vorgeschlagen in einem Datenendgerät (T) und geliefert durch Ursprungsserver (S_{IM}, Sₘₐᵢₗ, S_{Blog}, S...), wobei eine dieser Funktionen ein Instant-Messaging-Service (L) ist, wobei eine Liste, umfassend Benutzerkontakte (U1, U2, U3, U4), auf dem Bildschirm des Endgeräts angezeigt wird, **dadurch gekennzeichnet, dass**:
- ein Instant-Messaging-Server, der den Instant-Messaging-Service liefert, die Liste (L) der Benutzerkontakte (U1, U2, U3, U4) ausgibt,
- die Liste (L) der Benutzerkontakte (U1, U2, U3, U4) durch einen Server-Gateway (SP) verläuft, der vom Datenendgerät (T) entfernt ist,
- wobei der Server-Gateway (SP) schnell Funktionskontakte (F1, F2, F3) in die Liste (L) der Benutzerkontakte (U1, U2, U3, U4) hinzufügt,
- der Server-Gateway (SP) an das Datenendgerät (T) eine aggregierte Liste (L') überträgt, die eine einzige Schnittstelle bildet und die Benutzerkontakte (U1, U2, U3, U4) ebenso wie die Funktionskontakte (F1, F2, F3) umfasst,
- das Datenendgerät (T) auf seinem Bildschirm die aggregierte Liste (L') anzeigt, in der die Benutzerkontakte (U1, U2, U3, U4) und die Funktionskontakte (F1k, F2, F3) eingeschrieben sind,
- eine Funktion durch die Auswahl, aus der aggregierten Liste (L'), die auf dem Bildschirm des Datenendgerätes (T) angezeigt ist, des entsprechenden Funktionskontakts (F1, F2, F3) aktiviert wird.

2. Verfahren nach Anspruch 1, in dem der Server-Gateway (SP) eine Datenbank umfasst, in der jeder Benutzer eines Datenendgeräts (T) und die Funktionen, die mit den Diensten assoziiert sind, die die Benutzer abonniert haben, miteinander in Verbindung gebracht werden, wobei der Server-Gateway für jeden Benutzer die Funktionskontakte (F1, F2, F3) erzeugt, die mit den abonnierten Diensten assoziiert sind.

3. Verfahren nach Anspruch 1, in dem die Ursprungsserver (S_{IM}, Sₘₐᵢₗ, S_{Blog}, S...) an den Server-Gateway (SP) die Funktionskontakte (F1, F2, F3) übertragen, die mit den Diensten assoziiert sind, die der Benutzer des Datenendgeräts (T) abonniert hat.

4. Verfahren nach Anspruch 1, in dem die Ursprungsserver (Sₘₐᵢₗ, S_{Blog}, S...) an den Server-Gateway (SP) Informationen übertragen, die die Dienste angeben, die der Benutzer des Datenendgeräts (T) abonniert hat, wobei der Server-Gateway die Funktionskontakte (F1, F2, F3) erzeugt, die mit den empfangenen Informationen assoziiert sind.

5. Verfahren nach einem der vorhergehenden Ansprüche, in dem
- bei ihrer Anzeige auf dem Bildschirm des Datenendgeräts (T) die Benutzerkontakte (U1, U2, U3, U4) mit Anwesenheitsstatus assoziiert sind,
- bei ihrer Anzeige auf dem Bildschirm des Datenendgeräts (T) die Gesamtheit oder ein Teil der Funktionskontakte (F1, F2, F3) mit Status assoziiert ist, die Informationen über den Zustand der entsprechenden Funktionen enthalten,
- die verschiedenen Status regelmäßig aktualisiert werden.

6. Verfahren nach Anspruch 5, in dem das Datenendgerät (T) Aktualisierungsanfragen an Ursprungsserver (S_{IM}, Sₘₐᵢₗ, S_{Blog}, S...) überträgt, wobei in Antwort auf diese Anfragen die Ursprungsserver (S_{IM}, Sₘₐᵢₗ, S_{Blog}, S...) an das Datenendgerät (T) Informationen zur Aktualisierung der Status übertragen, die mit den Benutzerkontakten (U1, U2, U3, U4) und mit den Funktionskontakten (F1, F2, F3) assoziiert sind.

7. Vorrichtung zur Aktivierung der Funktionen, vorgeschlagen in einem Datenendgerät (T) und geliefert durch Ursprungsserver (S_{SIM}, Sₘₐᵢₗ, S_{Blog}, S...), wobei eine dieser Funktionen ein Instant-Messaging-Service ist, wobei eine Liste (L), umfassend Benutzerkontakte (U1, U2, U3, U4), auf dem Bildschirm des Endgeräts angezeigt wird, wobei diese Vorrichtung durch die Tatsache gekennzeichnet ist, dass sie folgendes umfasst:
einen Instant-Messaging-Server (S_{IM}), mit dem sich das Datenendgerät verbindet (T), wobei der Server ein Mittel umfasst, um die Liste (L) der Benutzerkontakte (U1, U2, U3, U4) auszugeben,
einen Server-Gateway (SP), der vom Datenendgerät (T) entfernt ist, und durch den die Liste (L) der Benutzerkontakte (U1, U2, U3, U4) verläuft, wobei der Server Folgendes umfasst:
- ein Mittel, um schnell die Funktionskontakte (F1, F2, F3) in die Liste (L) der Benutzerkontakte (U1, U2, U3, U4) hinzuzufügen,
- ein Mittel, um an das Datenendgerät (T) eine aggregierte (L') Liste zu übertragen, die eine einzige Schnittstelle bildet und die Benutzerkontakte (U1, U2, U3, U4) ebenso wie die Funktionskontakte (F1, F2, F3) umfasst, so dass die Liste auf dem Bildschirm des Endgeräts angezeigt wird, und durch die Tatsache, dass eine Funktion durch die Auswahl, in der aggregierten Liste (L'), die auf dem Bildschirm des Datenendgerätes (T) angezeigt ist, des entsprechenden Funktionskontakts aktiviert wird.

8. Datenendgerät, ausgestattet mit einem Bildschirm, und in dem mehrere Funktionen vorgeschlagen sind, wobei eine dieser Funktionen ein Instant-Messaging-Service ist, wobei oder eine Liste (L), ausgegeben von einem Instant-Messaging-Server, umfassend Benutzerkontakte (U1, U2, U3, U4), auf dem Bildschirm angezeigt wird, **dadurch gekennzeichnet, dass** das Endgerät von einem Server-Gateway (SP), der von dem Datenendgerät entfernt ist, eine aggregierte Liste (L') empfängt, die eine einzige Schnittstelle auf dem Bildschirm bildet und die Benutzerkontakte (U1, U2, U3, U4) ebenso wie die Funktionskontakte (F1, F2, F3) umfasst, und dadurch, dass eine Funktion durch die Auswahl, in der aggregierten Liste (L'), des entsprechenden Funktionskontakts (F1, F2, F3) aktiviert wird.

9. Datenendgerät nach Anspruch 8, wobei das Endgerät ein mobiles Telefon ist.

## Claims

1. Method for activating features proposed in a computer terminal (T) and delivered by source servers (S_{IM}, Sₘₐᵢₗ, S_{Blog}, S...), with one of these features being an instant messaging service where a list (L), comprising user contacts (U1, U2, U3, U4), is displayed on the screen of said terminal, **characterised in that**:
- an instant messaging server (S_{IM}), delivering the instant messaging service, emits the list (L) of user contacts (U1, U2, U3, U4),
- the list (L) of user contacts (U1, U2, U3, U4) transits via a gateway server (SP) that is remote from computer terminal (T),
- the gateway server (SP) adds, on the fly, feature contacts (F1, F2, F3) in the list (L) of user contacts (U1, U2, U3, U4),
- the gateway server (SP) transmits to the computer terminal (T) an aggregate list (L') forming a single interface and comprising the user contacts (U1, U2, U3, U4) as well as the feature contacts (F1, F2, F3),
- the computer terminal (T) displays on its screen the aggregate list (L') wherein are registered the user contacts (U1, U2, U3, U4) and the feature contacts (F1, F2, F3),
- a feature being activated by selecting, in the aggregate list (L') displayed on the screen of the computer terminal (T), the corresponding feature contact (F1, F2, F3).

2. Method according to claim 1, wherein the gateway server (SP) comprises a database wherein each user of a computer terminal (T) is matched with the features associated with the services to which said users have subscribed, said gateway server generating, for each user, the feature contacts (F1, F2, F3) associated with said subscribed services.

3. Method according to claim 1, wherein the source servers (S_{IM}, Sₘₐᵢₗ, S_{Blog}, S...) transmit to the gateway server (SP) the feature contacts (F1, F2, F3) associated with the services to which the user of the computer terminal (T) has subscribed.

4. Method according to claim 1, wherein the source servers (Sₘₐᵢₗ, S_{Blog}, S...) transmit to the gateway server (SP) information indicating the services to which the user of the computer terminal (T) has subscribed, said gateway server generating the feature contacts (F1, F2, F3) associated with said information received.

5. Method according to one of the preceding claims, wherein:
- when they are displayed on the screen of the computer terminal (T), the user contacts (U1, U2, U3, U4) are associated with presence statuses,
- when they are displayed on the screen of the computer terminal (T), all or a portion of the feature contacts (F1, F2, F3) are associated with statuses containing information on the status of the corresponding features,
- the various statuses are updated on a regular basis.

6. Method according to claim 5, wherein the computer terminal (T) transmits update requests to the source servers (S_{IM}, Sₘₐᵢₗ, S_{Blog}, S...), in response to these requests, the source servers (S_{IM}, Sₘₐᵢₗ, S_{Blog}, S...) transmit to the computer terminal (T) information for updating the statuses associated with the user contacts (U1, U2, U3, U4) and with the feature contacts (F1, F2, F3).

7. Device for activating features proposed in a computer terminal (T) and delivered by source servers (S_{IM}, Sₘₐᵢₗ, S_{Blog}, S...), with one of these features being an instant messaging service where a list (L), comprising user contacts (U1, U2, U3, U4), is displayed on the screen of said terminal, with this device **characterised by** the fact that it comprises:
- an instant messaging server (S_{IM}) to which the computer terminal (T) connects, said server comprising a means for emitting the list (L) of user contacts (U1, U2, U3, U4),
- a gateway server (SP) that is remote from the computer terminal (T) and via which transits the list (L) of user contacts (U1, U2, U3, U4), said server comprising:
- a means for adding on the fly the feature contacts (F1, F2, F3) in the list (L) of user contacts (U1, U2, U3, U4),
- a means for transmitting to the computer terminal (T) an aggregate list (L') forming a single interface and comprising the user contacts (U1, U2, U3, U4) as well as the feature contacts (F1, F2, F3), in such a way that said list is displayed on the screen of said terminal,
- and by the fact that a feature is activated by selecting, in the aggregate list (L') displayed on the screen of the computer terminal (T), the corresponding feature contact.

8. Computer terminal provided with a screen and wherein are proposed several features, with one of these features being an instant messaging service where a list (L) emitted by an instant messaging server (S_{IM}) comprising user contacts (U1, U2, U3, U4), is displayed on said screen **characterised in that** said terminal received from a gateway server (SP) remote from said computer terminal an aggregate list (L') forming a single interface on said screen and comprising the user contacts (U1, U2, U3, U4) as well as the feature contacts (F1, F2, F3), and **in that** a feature is activated by selecting, in the aggregate list (L'), the corresponding feature contact (F1, F2, F3).

9. Computer terminal according to claim 8, said terminal being a mobile telephone.
